# EUROPÄISCHE PATENTSCHRIFT

(11) **EP 1 884 300 B1**
(45) Veröffentlichungstag und Bekanntmachung des Hinweises auf die Patenterteilung: **10.03.2010**
(21) Anmeldenummer: 07014157.7
(22) Anmeldetag: 19.07.2007
(51) Int. Cl.: B22C 1/18, B22C 9/02, B22C 9/10

(54) **Formstoff, Giesserei-Formstoff-Gemisch und Verfahren zur Herstellung einer Form oder eines Formlings**
Moulding material, casting moulding material mixture and method for manufacturing a form or blank
Matière à mouler, mélange de fonderie et de matière à mouler et procédé destiné à la fabrication d'une forme et ou d'une pièce brute

(30) Priorität: 02.08.2006 DE 102006036381
(43) Veröffentlichungstag der Anmeldung: 06.02.2008
(73) Patentinhaber: Minelco GmbH, 45128 Essen (DE)
(72) Erfinder: Gerlach, Ralf-Joachim, 47803 Krefeld (DE)
(74) Vertreter: Albrecht, Ralf

(56) Entgegenhaltungen:
- EP-A1- 1 122 002
- WO-A-2005/012203
- WO-A-2005/107975
- DE-A1- 2 434 431
- DE-A1-102004 042 535
- UNBEKANNT: PRODUCT SPECIFICATION ELKEM MICROSILICA 971, [Online] März 2007 (2007-03), XP002451357 Gefunden im Internet: URL:www.refractories.elkem.com/dav/3785eb7 e24.pdf> [gefunden am 2007-09-18]

## Beschreibung

Die Erfindung betrifft einen Formstoff oder Formling für Gießereizwecke, bestehend aus 1 - 10% Bindemittel auf Alkalisilikatbasis, einem Zuschlag von 1 - 10 Gewichts% amorphem, angelöstem Siliziumdioxid, Rest Quarzsand mit einem Korngrößenbereich von 0,01 - 5 mm, sowie ein Verfahren für die Herstellung von Formstoff sowie Formlingen.

Ein Formstoffgemisch der vorgenannten Art ist aus der DE 10 2004 042 535 bekannt. Darin wird ein Formstoffgemisch beschrieben, das eine verbesserte Grünfestigkeit und Feuchtigkeitsbeständigkeit der daraus hergestellten Formlinge bereitstellt, ohne die Endfestigkeiten gegenüber einem Wasserglasbindemittel ohne amorphes Siliciumdioxid wesentlich zu beeinflussen.

Aus der WO2005/012203 ist ein Verfahren bekannt, mit dem eine Form bzw. ein Formling unter Verwendung von amorphen Siliziumoxid-Verbindungen erzeugt werden kann. Hierzu wird die amorphe Verbindung mit mindestens einer Base, weiteren Zusätzen wie Alkalimetallorganosilikaten und einem plättchenförmigen Ton als Grundstoff in einem Zweikomponentensystem vorgelegt und vermischt. Dabei entsteht eine Quellphase auf der Oberfläche der amorphen SiO₂-Partikel die zu einer Festigkeitssteigerung des Grünlings führt.

Aus der EP 1 122 002 ist ein Verfahren zur Herstellung von Formkörpern bekannt, bei dem eine Alkalie mit einem partikulären Metalloxid in einer Form unter Ausbildung von Metallaten umgesetzt und nachfolgend im Randbereich der Form unter CO₂-Beaufschlagung getrocknet wird, wobei ein nicht umgesetzter Kernbereich in der Form erhalten bleibt. Als partikuläres Metalloxid, welches die verfestigte Form im Wesentlichen ausmacht, kann insbesondere Rauchsilikat Verwendung finden.

Ein hoher Fließwiderstand eines Formstoffs oder einer Formstoffmischung verursacht während des Einfüllens in eine Form in einer Kernformmaschine ein ungleichmäßiges Einfließen, bei dem der Formstoffstrom abrupt wechselnden Fließgeschwindigkeiten und Scherkräften ausgesetzt wird. Ungleichmäßiges Einfließen kann die Qualität der Abformung, insbesondere bei feinteiligen Profilen, und die Formlingsoberfläche negativ beeinflussen. Weiterhin kann das ungleichmäßige Einfließen eine ungleichmäßige Dichte des hergestellten Formlings verursachen. Die ungleichmäßige Dichte bewirkt ein ungünstiges Verfestigungsverhalten des Formlings und kann teilporöse Formlingsabschnitte und inhomogene Wärmeleitfähigkeiten zur Folge haben.

Aus der DE 10 2004 042 535 ist bekannt, die Fließfähigkeit eines Gemisches durch plättchenförmige Zusätze wie z. B. Grafit oder MoS₂ anzupassen. Damit erhöht sich jedoch die Gefahr von ungleichmäßigen Vernetzungen, da insbesondere plättchenförmige Zusätze entlang ihrer flächig erstreckten Seiten lokal begrenzt mit anliegenden Formstoffpartikeln während des Trocknens Binderbrücken ausbilden können. Die Binderbrücken zwischen den Seitenflächen solcher plättchenförmiger Zusätze und anliegenden Formstoffpartikeln unterliegen in ihrer Anzahl, Größe und Stabilität im Vergleich zu den Binderbrücken, die direkt zwischen Formstoffpartikeln ausgebildet werden, nicht vorhersagbaren Schwankungen. Eine solche zusätzliche, lokale Vernetzung von Formstoffpartikelgruppen über Plättchen verändert die Eigenschaften des Formlings in nicht lokal kontrollierbarer Weise. Bei ungleichmäßiger Verteilung mit Formstoffpartikelgruppen von hohem Vernetzungsgrad ist ein gleichmäßiges Verhalten der getrockneten Form im Guss nicht mehr gewährleistet. So kann eine Formstoffpartikelgruppe durch plättchenförmige Zusätze starke, einzelne Bindrbrücken ausbilden, die mehrere Teilchen innerhalb der Partikelgruppe fest miteinander vernetzen. Dadurch kann es nachfolgend zu Gussfehlern bis hin zum Versagen des Formlings kommen.
Andererseits stellen die plättchenförmigen Zusätze in der Formstoffmischung über ihre geometrische Form die zur Verbesserung der Fließfähigkeit notwendigen Gleitflächen zur Verfügung. Die Zusammensetzung und Verarbeitung einer Formstoffmischung ist nach dem Stand der Technik bei plättchenförmigen Zusätzen in komplexen Testreihen mit den Eigenschaften des herzustellenden Formlings wie z. B. einem Sandkern, exakt abzustimmen.

Die in der Gießerei benötigten Sandkerne werden in Kernformmaschinen hergestellt. Hierbei wird ein Formstoff, enthaltend Kernsand, Bindemittel und Zuschläge, durch plötzliche Expansion eines begrenzten Druckluftvolumens mit hoher Geschwindigkeit in einen Kernkasten eingeschossen.

Um möglichst kurze Taktzeiten und eine kostengünstige Auslastung von Anlagen zu erreichen wurde die Geschwindigkeit, mit der der Kernsand eingeschossen wird, kontinuierlich erhöht.

Problematisch ist hierbei der Materialtransport und die Verdichtung des Formstoffs in den Kernkasten. Komplex ausgestaltete Kernformen mit kleinmaßigen Ausformungen werden bei den hohen Einschussgeschwindigkeiten nicht mehr vollständig oder ungleichmäßig ausgefüllt.

Verfahren nach dem Stand der Technik beschreiben zur Lösung dieses Problems Maßnahmen wie nachträgliche Verdichtung, mehrstufige Einschießverfahren oder teilflüssige Reaktivformstoffe, welche im Kernkasten langsam aushärten. Diese Maßnahmen sind mit einem erhöhtem apparativem Aufwand und/oder längeren Taktzeiten verbunden, was eine beschleunigte, kostengünstige Produktion von Kernen, Formen oder Formlingen beeinträchtigt. Außerdem ist die Vernetzung durch die Reaktivformstoffe schwer beherrschbar. Für eine gleichmäßig ablaufende Vernetzungsreaktion müsste das Formstoffgemisch homogen mit gleichmäßiger Schichtdicke zur Reaktion gebracht werden. Formlinge sind in ihrer räumlichen Ausgestaltung hingegen auf eine gezielte, lokal unterschiedliche Wärmeverteilung während des Gussprozesses ausgelegt. Daher ist die Vernetzungsreaktion in einem Reaktivformstoff häufig ungleichmäßig. Während der Reaktion freigesetzte Reaktionswärme sowie Reaktionsprodukte wie z. B. Wasser oder CO₂ beeinflussen dabei den Reaktionsverlauf. Dadurch kommt es in unterschiedlich dicken Formlingsbereichen zu verschieden ausgeprägten Vernetzungen der Formstoffpartikel, die wiederum die Eigenschaften des Formlings während des Gussprozesses beeinflussen. Komplexe Gussteile erfordern bei der Verwendung von Reaktivformstoffen aufwendig und präzise gesteuerte Herstellungsabläufe der Formlinge, um ausreichend gleichmäßige Formlingseigenschaften für den Guss bereitstellen zu können.

Die Vernetzung spielt nicht nur für die erreichbare Festigkeit eine wichtige Rolle sondern auch für das spätere Zerfalls-Verhalten. Einerseits soll der Formstoff bzw. der Formling eine hohe Grünfestigkeit innerhalb kürzester Zeit erreichen. Andererseits soll der hergestellte Kern beim Gießvorgang hohen thermischen Belastungen standhalten, ohne dass er seine Maßhaltigkeit verliert. Nach erfolgtem Abguss soll jedoch das Gerüst des Kerns gute Zerfallseigenschaften aufweisen, das heißt mit möglichst einfachen Mitteln in seine ursprünglichen Bestandteile zurückgeführt werden können.

Aufgabe der vorliegenden Erfindung ist es, einen Formstoff oder einen Formling bzw. ein Verfahren zu ihrer Herstellung zu entwickeln, mit denen eine höhere Qualität von Sandkernen bei gleichmäßiger Verdichtung der Formstoffpartikel in einem kostengünstigen Verfahren ermöglicht wird. Außerdem soll die thermische Belastbarkeit der hergestellten Formlinge derart verbessert werden, dass auch moderne Gießverfahren mit hohen Standzeiten der Form durchgeführt werden können. Danach soll die Form bzw. der Kern mit mechanischen Mitteln leicht zerstört und in seine Ausgangsbestandteile überführt werden können.

Wesentlich im Sinne der vorliegenden Erfindung ist die Verwendung von 1 bis 10 Gewichts% amorphem, kugelförmigem, angelöstem SiO₂, bei dem maximal 1,5 Gewichts% Anteil an Partikeln mit einem Durchmesser von 45 oder mehr Mikrometern in einem Gemisch aus Quarzsand und einem Bindemittel auf Alkalisilikatbasis enthalten sind. Auf der Oberfläche des Siliziumdioxids soll eine Quellphase ausgebildet sein, die eine Dicke von 0,5 - 1 %, bezogen auf den mittleren Korndurchmesser aufweist.

Anlösen bedeutet im Sinne der vorliegenden Erfindung, dass auf dem amorphen SiO₂ mit mehr als 85%iger Reinheit in einer mit einem pH-Wert von 9 bis 14 angesetzten Suspension eine Quellphase ausgebildet wird. Die Quellphase ensteht als Schicht auf dem amorphen SiO₂ unter Ausbildung eines räumlichen Netzwerks von miteinander verbundenen Silikat-Gruppen des amorphen SiO₂. Die Hohlräume zwischen den Silikatgruppen werden durch die alkalisch angesetzte Flüssigkeit ausgefüllt. Dabei werden einzelne Sauerstoffbrücken jeweils durch 2 OH⁻-Ionen der alkalischen Flüssigkeit gebrochen und unter Erzeugung von einem H₂O-Molekül durch zwei negativ geladene, getrennte -O⁻ -Gruppen ersetzt und die Hohlräume des Netzwerks aufgeweitet. Durch das Aufweiten von Hohlräumen in der Quellphase entstehen örtlich begrenzte Haftungsinseln. Das Aufweiten des mittleren Korndurchmessers des ursprünglichen, trockenen SiO₂ während des Anlösens ergibt einen um 1 bis 2% vergrößerten Teilchendurchmesser. Im angelösten Zustand weist das amorphe, kugelförmige SiO₂ eine Quellphase in Form einer Gel-Schicht mit stabiler Struktur auf. Ein amorphes SiO₂ mit einer solchen Quellphase wird im Sinne der vorliegenden Erfindung auch als alkalisch eingestellt bezeichnet.

Beträgt der Anteil an amorphem SiO₂ mit einer Korngröße von mehr als 45 Mikrometern mehr als 1,5%, so werden Formstoffgemische mit schwankender Fließfähigkeit erhalten, die zudem eine längere Trocknungszeit zum Erzielen der notwendigen Grünfestigkeit benötigen. Bei größeren SiO₂-Kugeln sinkt die Gesamtzahl an SiO₂-Kugeln pro Gewichtsanteil sowie die durch die Teilchen zur Verfügung stehende Oberfläche. Weiterhin zeigen die Teilchen mit steigendem Durchmesser einen pro Längeneinheit abnehmenden Krümmungswinkel. Bei Auflage größerer Teilchen aufeinander kommt es durch den verringerten Krümmungswinkel zu einer größeren Kontaktfläche, die einen festeren Zusammenhalt und eine stärkere Agglomeration ermöglicht. Eine ungleichmäßige Verteilung und Vernetzung der einzelnen Teilchen kann durch Agglomerate in Kombination mit der sinkenden Gesamtzahl an SiO₂-Kugeln erklärt werden.

Betrug bei 1 bis 10% amorphem SiO₂ mit kugelförmigem Korn bei einem mittleren Korndurchmesser zwischen 10 und 45 Mikrometern der Anteil der Körner mit einer Korngröße von mehr als 45 Mikrometern weniger als 1,5%, konnten mit konstant verbesserter Fließfähigkeit und gleichmäßiger Trocknungszeit Formen bzw. Formlinge hergestellt werden. Die sphärischen SiO₂-Partikel sind gleichmäßig zwischen den Quarzsandpartikeln als Gleitvermittler verteilt, beabstanden die Quarzsandpartikel zueinander und verhindern ein blockierendes Verzahnen der Quarzsandpartikel. Das gegenseitige Abgleiten erfolgt über die oberflächlich ausgebildete, stabile Quellphase, welche eine verbesserte Beweglichkeit der Quarzsandpartikel zueinander im Fließprozess bereitstellt.

Beträgt die Reinheit des SiO₂ weniger als 85%, so wird das chemische Verhalten einzelner SiO₂-Kugeln während des Anlösens lokal durch die Verunreinigungen verändert und die Aufweitung des Korndurchmessers fällt stark unterschiedlich aus. Dies kann durch eine instabile, nicht einheitlich ausgebildete Quellschicht erklärt werden. Mit amorphem SiO₂ mit weniger als 85% Reinheit hergestellte Formlinge weisen eine stark schwankende Neigung zur Anhaftung von Formstoffpartikeln am Metall nach dem Guss auf. Beträgt die Reinheit des SiO₂ mehr als 85%, so werden regelmäßig Formlinge mit einer verringerten Neigung zur Anhaftung von Formstoffpartikeln am Metall nach dem Guss bereitgestellt.

Erfindungsgemäß wird das angelöste, kugelförmige SiO₂ dem Formstoff in einer Menge von 1 bis 10 Gewichts% zugegeben. Die Erfinder gehen davon aus, dass die Quellphase, welche die kugelförmigen SiO₂-Partikel umgibt, gegenüber den benachbarten Quarzsandpartikeln eine deutlich verringerte Haft- und Gleitreibung aufweist. Mit verringerter Haft- und Gleitreibung kann das als sphärische SiO₂-Partikel eingesetzte, amorphe SiO₂ im Fließprozess benachbarte Formstoffpartikel beabstanden und über die ausgebildete Quellphase auf den Kugeloberflächen der SiO₂-Kugeln mit verringertem Gleitwiderstand gegeneinander abgleiten lassen. Im Fließprozess kann somit das verbesserte Fließverhalten durch eine dauerhaft und reibungsstabil ausgebildete Gel-Schicht mit besonders günstigem Gleitreibungseigenschaften auf dem amorphen SiO₂ erklärt werden. An den Auflagepunkten sind die SiO₂- und Formstoff-Partikel durch die stabile Quellphase voneinander getrennt, wobei die Gleitreibung der Teilchenoberflächen durch die Quellphase bestimmt ist.

Die erfindungsgemäße Formstoffmischung kann vorteilhaft in Vorrichtungen und Verfahren, welche die Trocknung von Formstoffmischungen auf Basis von Quarzsand und wässrigem Alkali-Silikat-Binder vorsehen, ohne weitere, konstruktive Maßnahmen verwendet werden. Das angelöste SiO₂ setzt gleichfalls während der Trocknung nur Wasser frei und ermöglicht eine einfache Reaktionsführung ohne zusätzlich notwendige Maßnahmen für zusätzliche, chemische Prozesse oder Reaktionsprodukte.

Beträgt der Anteil an amorphem, kugelförmigem SiO₂ mehr als 10 Gewichts%, so werden längere Trockunungszeiten zur vollständigen Entfernung des Wassers notwendig. Bei erhöhtem Anteil an SiO₂-Partikeln im Formling bilden vermehrt benachbarte SiO₂-Partikel gemeinsame Auflagepunkte aus. Im Bereich der gemeinsamen Auflagepunkte entstehen größere Bereiche von aneinander grenzenden, räumlichen, wasserhaltigen Netzwerken der oberflächlich ausgebildeten Quellphase. Die Erfinder führen die längeren Trocknungszeiten auf die erhöhte Anzahl der größeren Bereiche der wasserhaltigen Netzwerke zurück. Mit einem Anteil an amorphem, kugelförmigem SiO₂ von 1 bis 10 Gewichts% werden Formstoffgemische erhalten, die wiederholbar nach konstanter Trocknungszeit die notwendige Grünfestigkeit aufweisen.

Überraschender Weise zeigte amorphes, angelöstes , kugelförmiges SiO₂ neben der verbesserten Fließfähigkeit weiterhin eine Erhöhung der Festigkeit der aus dem Formstoff hergestellten Formlinge bei alkalisch eingestellter Oberfläche des SiO₂. Die Erfinder nehmen an, dass die auf der Oberfläche des amorphen SiO₂ ausgebildete Quellphase bei der Trocknung mit jedem Auflagepunkt auf einem benachbarten Quarzsandpartikel eine erhöhte Anzahl an inselförmig angeordneten Bindungszentren zur Ausbildung von Bindungsbrücken bereitstellt.

Weitere, vorteilhafte Effekte ergeben sich an Hand der nachfolgenden Ausführungsbeispiele. Die Ausführungsbeispiele dienen zur Erläuterung der Erfindung und sind in ihren Merkmalskombinationen nicht als die Erfindung einschränkend zu verstehen. Die Merkmale können sowohl einzeln als auch in Kombination im Rahmen der Erfindung Anwendung finden.

Als Formstoff wurden unterschiedliche Gemische unter Verwendung der folgenden Ausgangsmaterialien hergestellt:
gewaschener Quarzsand des Typs H32, mittlere Korngröße 0,32 mm,
anorganischer Binder auf Alkali-Silikatbasis mit einem Gehalt an Eisen, Cadmium und/oder Aluminium von 0,01 - 0,5%
amorphes, kugelförmiges SiO₂ mit einem Anteil an Partikeln größer 45 Mikrometer von höchstens 1,5% und einer Reinheit von mehr als 85%.

Die Bestimmung der mittleren Korngröße erfolgte in einem Granulometer nach dem Prinzip der Streulichtanalyse mittels eines Rotlicht-Diodenlasers mit multiplen Detektoren in einer 15 ml Standzelle mit Magnetrührer. Die Partikelgrößenanalyse erfolgt hierbei durch Laserbeugungsverfahren gemäß DIN / ISO 13320. Die zu bestimmenden Partikel wurden mit einem geeigneten Dispergiermittel in eine Suspension überführt. Jeweils 0,1 ml der homogenisierten Suspension wurden zur Messung der Korngröße in eine Messzelle mit vorgelegtem, destilliertem Wasser gegeben und die Korngröße innerhalb von einer Minute bestimmt. Das verwendete, amorphe SiO₂ wies eine mittlere Korngröße von 30 bis 45 Mikrometern auf.

Zur Bestimmung der ausgebildeten, stabilen Quellphase wurden die SiO₂-Kugeln in Suspension in die Messzelle eingebracht und die Korngröße in Abständen von 30 Sekunden bestimmt, bis für mehrere Minuten keine weitere Veränderung mehr festgestellt werden konnte.

### Beispiel 1: thermische Belastbarkeit der Formlinge

Zwei Mischungen wurden in einem Flügelmischer innerhalb von 3 Minuten angesetzt und anschließend auf einer Kernschießmaschine zu je 4 Kernen geschossen. Es wurde eine zuvor mit einem Teil des Binders zubereitete Suspension von amorphem SiO₂ verwendet, um beschleunigt eine homogene Durchmischung der Komponenten zu erzielen. Die Suspension hatte einen pH-Wert von 9,2 und wurde zusammen mit den anderen Komponenten wie vorbeschrieben im Mischer vermischt. Der Schießdruck betrug 5 bar, die Schießzeit 1 Sekunde, der angelegte Unterdruck 0,9 bar. Die Kerne wurden im Kernkasten 30 Sekunden lang bei 180 °C in der Maschine vorgehärtet, als Grünlinge entnommen, anschließend in einer Mikrowelle 3 Minuten bei 1000 Watt getrocknet und abschließend gewogen. Hierbei handelt es sich um Kerne für den Guss eines längserstreckten Biegeriegels mit 185,4 mm auf 22,7 mm auf 22,7 mm. Für den Guss wurde eine Graugussschmelze mit einer mittleren Temperatur von 1275 °C +- 25 °C in der Gießpfanne verwendet. Die gegossenen Riegel wurden nach 3 Tagen Abkühlzeit aus den Kernen befreit. Anschließend wurden je 4 Riegel auf ihre Durchbiegung hin untersucht.

Die Durchbiegung eines Gussteils resultiert aus der thermischen Belastung des Kerns während des Gießens in Kombination mit der durch das einströmende Metall erzeugten Auftriebskraft. Sie ist ein Maß für die Temperaturbeständigkeit und Maßhaltigkeit eines Kernmaterials. Die Durchbiegung wurde an den fertigen, quer zum Meßgerät ausgerichteten Riegeln in der Riegelmitte als durchschnittliche Abweichung der Außenkanten von der Horizontalen bestimmt. Formstoffmischungen und Messwerte sind in der nachfolgenden Tabelle aufgeführt.

**Tabelle 1**

| Guss einer Graugussschmelze, enthaltend 93%Fe, 3,3%C, 2%Si, 0,4%Mn, Verunreinigungen jeweils < 0,05% | Vergleichskern Formstoffgemisch: | Erfindungskern Formstoffgemisch: |
|---|---|---|
| | 5 kg Kernsand, | 5 kg Kernsand, |
| | 120g Binder, | 90 g Binder |
| | 5g Silikonöl | 54 g SiO₂ |
| | | |
| | Riegel-Durchbiegung in mm | Riegel-Durchbiegung in mm |
| 1. Riegel | 0,73 | 0,7 |
| 2. Riegel | 0,85 | 0,2 |
| 3. Riegel | 0,65 | 0,13 |
| 4. Riegel | 0,65 | 0,23 |
| Durchschnitt | 0,72 | 0,31 |

Die mit den erfindungsgemäß hergestellten Kernen erzeugten Riegel belegen eine im Durchschnitt niedrigere Neigung der Kerne zur Durchbiegung während des Gießens.

Eine geringere Durchbiegung weist auf eine verbesserte Struktur im Formling hin, die in der Lage ist, die bei thermischer Belastung auftretenden Deformationsspannungen aufzunehmen. Die Deformationsspannungen sind durch Entwässerungs- und Sinterprozesse begründet, die im Formling durch die hohe Temperatur des einfließenden Metalls ausgelöst werden. Die Erfinder gehen davon aus, dass die gleichmäßig verteilten SiO₂-Kugeln über ihre oberflächlich ausgebildete Quellphase während des Trocknens eine Vielzahl an Binderbrücken zu benachbarten Sandpartikeln ausbilden. Durch die große Anzahl von kleinen, Partikel verbindenden Binderbrücken können Deformationsspannungen durch die homogene, Vernetzung der Formstoffpartikel über eine Vielzahl an Binderbrücken auf größere Formlingsvolumina verteilt und elastisch kompensiert werden.

Durch eine homogene, feinteilige Vernetzung kann die gesteigerte, thermische Belastbarkeit eines erfindungsgemäßen Formlings erklärt werden.

### Beispiel 2: Dichte der Formlinge

Zwei Gemische wurden wie in Beispiel 1 beschrieben zu einem Kern geschossen. Für jede Mischung wurden jeweils 4 gleiche, barrenförmige Kerne gleichen Volumens hergestellt. Mischungen und Gewichte sind in der nachfolgenden Tabelle aufgeführt.

**Tabelle 2**

| | Vergleichsmischung | Erfindung |
|---|---|---|
| | Vergleichsmischung | 5 kg Kernsand, |
| | 120g Binder, | 90 g Binder |
| | 5g Silikonöl | 72 g SiO₂ |
| | Gewicht in Gramm | Gewicht in Gramm |
| 1. Kern | 140,9 | 142,6 |
| 2. Kern | 138,8 | 142,7 |
| 3. Kern | 142,4 | 141,3 |
| 4. Kern | 141,1 | 141,9 |
| Durchschnitt | 140,8 | 142,13 |

Die erfindungsgemäßen Kerne zeigen ein im Durchschnitt höheres Gewicht. Bei volumengleichen Körpern entspricht ein höheres Gewicht einer höheren Dichte. Die geringe Abweichung des einzelnen Kerngewichts vom Mittelwert kann durch das verbesserte Fließ- und Verdichtungsverhalten gegenüber einem Formstoffgemisch mit Silikonöl erklärt werden.

Die Vergleichsmischung weist trotz eines zugesetzten Fließmittels eine niedrigere, mittlere Masse der Kerne auf. Weiterhin unterliegen die Gewichte der einzelnen Kerne deutlich stärkeren Abweichungen vom Mittelwert.

Die erzielten Dichten weisen auf eine gleichmäßigere, verbesserte Fließfähigkeit der Formstoffmischung während des Einschießens in die Form hin. Die SiO₂-Kugeln mit ihrer oberflächlich ausgebildeten Quellphase lassen die Formstoffpartikel erleichtert aneinander vorbeigleiten. Die Quellphase erlaubt dabei den Formsandpartikeln ein erleichtertes Abgleiten über die kleinflächigen Auflagepunkte auf den SiO₂-Kugeln. Dies kann erklären, warum in der Formstoffmischung im Fluss beispielseise in geringerem Ausmaß blockierende Verzahnungen der Quarzsandpartikel untereinander auftreten. Das einzelne Sandpartikel weist eine verbesserte Beweglichkeit gegenüber den benachbarten Formstoffpartikeln auf und die Formstoffmischung stellt auch bei hohen Scherkräften, wie sie beim Einschießen mit erhöhtem Druck auftreten, eine gleichmäßigere und bessere Fließfähigkeit bereit.

Wie nachfolgend dargelegt spiegelt die Grünfestigkeit sowie die Endfestigkeit der Kerne die Ergebnisse der Gewichtsbestimmung wieder. Die erfindungsgemäßen Kerne zeigten eine deutlich niedrigere Schwankung der per punktueller Belastung bis zur Deformation bestimmten Grün- sowie Endfestigkeit.

Mit der erfindungsgemäßen Mischung ließen sich bei reduziertem Bindergehalt konstantere und höhere Dichten der hergestellten Kerne erzielen.

### Beispiel 3: Endfestigkeit der Formlinge

Zur Untersuchung des Einflusses des SiO₂-Zusatzes auf die Endfestigkeit der Kerne wurde eine Suspension von amorphem, kugelförmigem SiO₂ in einer größeren Menge Binder angesetzt. Anschließend wurden insgesamt 4 Chargen mit den weiteren Komponenten unter gleichen Bedingungen wie in Beispiel 1 beschrieben zu je 4 Kernen verarbeitet. Abschließend wurde eine Vergleichsmischung wie in Beispiel 2 beschrieben angefertigt und ebenfalls zu 4 Kernen verarbeitet.

Die Kerne mit SiO₂-Zusatz zeigten alle die aus Beispiel 1 bekannte, erhöhte Dichte. Die fertig getrockneten Kerne wurden in eine 3-Punkt-Biegevorrichtung eingelegt und die Kraft, welche zum Bruch des Kernes führt, wurde bestimmt. Diese Kraft ist in der nachfolgenden Tabelle als 'Bruchkraft' bezeichnet. Hierbei zeigte sich bei den Kernen mit SiO₂-Zusatz eine von Kerncharge zu Kerncharge ansteigende Biegefestigkeit. Dieses Phänomen konnte mit dem pH-Wert der sequentiell zugesetzten SiO₂-Binder-Suspensionen korrelliert werden. Maximale Biegefestigkeit wurde bei konstantem pH-Wert der angesetzten Suspension erreicht. Die nachfolgende Tabelle zeigt den zum Zeitpunkt der Zugabe der Suspension bestimmten pH-Wert, die ungefähre Standzeit der Suspension sowie die durchschnittliche Biegefestigkeit für jeweils 4 Kerne.

**Tabelle 3**

| | Suspension SiO₂-Binder pH bei Zugabe | Suspension SiO₂-Binder Standzeit in Minuten | mittlere Bruchkraft +- Abweichg. in N |
|---|---|---|---|
| 1. Charge | 12,4 | 0 | 165 +-7 |
| 2. Charge | 11,8 | 4 | 195 +-5 |
| 3. Charge | 11,5 | 7 | 202 +-6 |
| 4. Charge | 11,4 | 10 | 203 +-4 |
| Vergleichsmischung | -- | -- | 144 +-17 |

| | | | |
|---|---|---|---|
| Vergleichsmischung: 5 kg Kernsand, 120g Binder, 5g Silikonöl | | | |
| Erfindung: 4 Chargen zu je 5 kg Kernsand, 90g Binder, 72 g SiO₂ | | | |

Die Tabelle des Beispiels 3 zeigt, dass durch Zusatz von angelöstem, kugelförmigem, amorphem SiO₂ zu einer Formstoffmischung die Biegefestigkeit eines daraus hergestellten Kerns verbessert wird.
Weiterhin wird ein Einfluss des pH-Werts der SiO₂-Suspension deutlich. Zunächst nimmt der pH-Wert der alkalisch angesetzten Suspension ab, was durch den Verbrauch von OH- -Ionen während des Ausbildens der Quellphase erklärt werden kann. Nach etwa 4 Minuten ist ein um 0,6 pH abgesenkter pH-Wert erreicht worden, der sich nur noch geringfügig ändert. Nach ca. 4 Minuten kann somit dem Erklärungsmodell der Erfinder gemäß die Oberfläche des amorphen SiO₂ als nahezu vollständig angelöst und mit einer Quellphase umhüllt angesehen werden. Das alkalisch eingestellte, amorphe SiO₂ geht mit einer deutlich verbesserten Biegefestigkeit des hergestellten Kerns einher.

Weitere Versuche zur pH-Wert-Stabilität einer alkalischen Suspension von amorphem, kugelförmigem SiO₂ wurden wie nachfolgend beschrieben durchgeführt.

Amorphes, kugelförmiges SiO₂ mit einem Reinheitsgrad und einer Korngrößencharakteristik wie vorbeschrieben wurde in Alkali-Silikatlösung und/oder Natronlauge mit einem auf 9 bis 14 angesetzten pH-Wert suspendiert. Der Gehalt an SiO₂ in der Suspension lag zwischen 10 und 80 Gewichts%, bevorzugt 20 bis 70 Gewichts%. Der pH-Wert der alkalisch angesetzten Suspension wurde nachfolgend im Abstand von 30 Sekunden bestimmt. Die Suspensionen zeigten zu Beginn des Versuchs die vorbeschriebene, rapide pH-Abnahme. Nach spätestens 4 Minuten war der pH-Wert mit einer maximalen Änderung von ca. 0,1 pH pro Minute stabil. Nach maximal 10 Minuten Standzeit zeigte die Suspension des alkalisch eingestellten, amorphen SiO₂ für mehrere Stunden keine weitere Änderung des pH-Werts mehr.

Alkalisch eingestellte, pH-stabile SiO₂-Suspensionen zeigten neben dem in Beispiel 2 belegten, verbesserten Fließverhalten weiterhin die in der Tabelle 3 des Beispiels 3 deutlich werdende, verbesserte Endfestigkeit der daraus hergestellten Kerne.

Bei einer Alkalikonzentration, die deutlich größer als die Konzentration eines Ansatzes für einen pH-Wert von 14 war, wurde ein langsam und stetig abnehmender Korndurchmesser der SiO₂-Partikel festgestellt. Dies kann durch ein langsames Auflösen der SiO₂-Partikel durch die mehrfach überstöchiometrische Konzentration an Alkali erklärt werden. So hergestellte Formstoffgemische zeigten weder verbesserte Fließfähigkeit noch bessere Endfestigkeit der hergestellten Formen, was mit der abweichenden Morphologie der sich auflösenden SiO₂-Oberfläche erklärt werden kann.

Bei einem angesetzten pH-Wert von weniger als 9 konnte die Bildung einer Quellphase mit einer Aufweitung des mittleren Korndurchmessers von 1 bis 2% innerhalb der ersten 4 Minuten nicht bei allen Suspensionen erreicht werden. Betrug die Aufweitung des mittleren Korndurchmessers weniger als 1%, so zeigten die Suspensionen schwankende Verbesserungen der Fließfähigkeit, ohne die zuvor bei stabil ausgebildeter Quellphase erzielten Fließfähigkeiten zu erreichen. Quellphasen, die durch eine Aufweitung des mittleren Korndurchmessers von 1 bis 2% gekennzeichnet waren, zeigten die vorbeschriebene, verbesserte Fließfähigkeit. Suspensionen wurden in den nachfolgenden Versuchen auf einen pH-Wert von mindestens 9 angesetzt, um zuverlässig innerhalb der ersten 4 Minuten einen stabilen pH-Wert und eine Quellphase mit einer Aufweitung des mittleren Korndurchmessers des ursprünglichen, trockenen SiO₂ von 1 bis 2% einzustellen.

Vorteilhaft verbesserte Formlinge wurden in weiteren Versuchen bei Mischungen gefunden, bei denen die mittlere Korngröße der Sandpartikel und die mittlere Korngröße des amorphen SiO₂ die gleiche Größenordnung aufwiesen. So wurden beispielsweise Formstoffmischungen angesetzt, die eine klassierte und gesichtete Quarzsandfraktion mit einer Korngröße im Bereich um 0,01 mm, was 10 Mikrometern entspricht, und 1 bis 10% amorphes, kugelförmiges SiO₂ mit einem mittleren Korndurchmesser zwischen 10 und 45 Mikrometern enthielten. Solche Formstoffmischungen stellten bei gleicher Rührgeschwindigkeit in kürzerer Zeit eine homogene Mischung bereit und ergaben bei der Verarbeitung zum Formling auch bei geringerem Einschussdruck Formlinge mit verbesserter Dichte, Gleichmäßigkeit und Profiltreue.

Die Ergebnisse von Beispiel 2 stützen die Theorie, dass eine durchgehende, stabil alkalische Quellphase auf dem amorphen SiO₂ dessen Oberfläche aktiviert und zur Ausbildung von Binderbrücken durch zusätzliche Bindungszentren beiträgt. Es kann angenommen werden, dass die Oberfläche eines solchen, alkalisch eingestellten SiO₂-Partikels durch negativ geladene Sauerstoffgruppen gekennzeichnet ist.

Insbesondere in Anlagen, bei denen die Einzelkomponenten eines Formstoffgemisches über mehrere Tage in großen Behältern vorrätig gehalten werden, kann die alkalisch eingestellte SiO₂-Suspension vorteilhaft durch Vermischen von trockenem, amorphem, kugelförmigem SiO₂ mit dem alkalischen Binder erzeugt werden. Durch die Herstellung der Suspension unmittelbar vor der Verwendung wird das amorphe SiO₂ frisch und in gleichmäßiger Qualität alkalisch eingestellt. Mit einem Anteil von 1 bis 10 Gewichts% an frisch alkalisch eingestelltem SiO₂ bezogen auf die Sandmenge konnte in den Versuchen zuverlässig eine Formstoffmischung mit verbesserter Fließfähigkeit und höherer Endfestigkeit der daraus hergestellten Formlinge bereitgestellt werden.

Formstoffmischungen mit weiteren Zuschlägen, welche aus Phosphor- und/oder Borsäureverbindungen bestanden, erwiesen sich als nachteilig. Solche Zusätze, welche zur Verbesserung von anorganischen Bindern bekannt sind, erniedrigten in den Formstoffmischungen den pH-Wert und verschlechterten die Fließfähigkeit der Mischung. Es zeigte sich, dass Binder auf Alkalisilikatbasis mit sauren Zusätzen unter Ausbildung von Salzen reagieren. Mit einem Binder auf reiner Alkalisilikatbasis ohne weitere Zuschläge der vorgenannten Art ließen sich bei einem Bindergehalt von 1 bis 10% in der Gesamtmischung die erfindungsgemäßen Wirkungen zuverlässig feststellen.

Weiterhin erwiesen sich schwach basische Begleitstoffe wie Metalloxide, welche als Hydroxide in silikatische Strukturen eingebunden werden können, als die Trocknungszeit verringernd. Im Vergleich mit einem reinen Alkalisilikatbinder zeigte ein Binder auf Alkalisilikatbasis mit einem Gehalt an Eisen, Aluminium und/oder Cadmium von 0,01 bis 0,50 % bei der Herstellung von Formlingen eine 5% verringerte Trocknungszeit.

Mit der erfindungsgemäßen Mischung wird eine höhere Endfestigkeit der Kerne erzielt.

### Beispiel 4: Eigenschaften im Gussprozess

Um die Neigung eines erfindungsgemäßen Formstoffs zur Ausbildung von Haftbrücken im Guss zu überprüfen, wurden zwei Mischungen wie in Beispiel 2 beschrieben angesetzt und zu jeweils 4 Kernen verarbeitet. Die Kerne waren für den Guss von Riegeln, deren Querschnitt ein H-Profil aufweist, ausgelegt. So wird während des Gusses eine vergrößerte Oberfläche zur Ausbildung möglicher Haftbrücken angeboten. Wie zuvor wurde eine Graugussschmelze mit einer mittleren Temperatur von 1275 °C +- 25 °C in der Gießpfanne verwendet und die gegossenen Riegel nach 3 Tagen Abkühlzeit aus den Kernen befreit. Hierbei wurden die Riegel zunächst mit Hilfe eines Hammers erschüttert, anschließend gegebenenfalls mit Hilfe eines Dorns von anhaftenden Kernteilen befreit, gereinigt und abschließend auf hartnäckige Anhaftungen und Vererzungen untersucht.

Formstoffmischungen und Beurteilung der Anhaftungen sind in der nachfolgenden Tabelle aufgeführt.

**Tabelle 4**

| Guss einer Graugusschmelze, 2%Si, 0,4%Mn, Verunreinigungen jeweils < 0,05% | Vergleichskern Formstoffgemisch: 5 kg Kernsand, 120g Binder, 5g Silikonöl | Erfindungskern Formstoffgemisch: 5 kg Kernsand, 90 g Binder 54 g SiO₂ |
|---|---|---|
| 1. Riegel | Hammer / Dorn / A | Hammer/-/ A |
| 2. Riegel | Hammer / Dorn / A, V | Hammer/-/ A |
| 3. Riegel | Hammer / Dorn / A, V | Hammer/-/ A |
| 4. Riegel | Hammer / Dorn / A | Hammer/-/ A |

| | | |
|---|---|---|
| Hammer = Erschütterung des im Kern befindlichen Riegels mit einem Hammer | | |
| Dorn = gegebenenfalls Freilegen des Riegels mit einem Dorn | | |
| A = Anhaftungen von Kernsand; V = Vererzungen | | |

Die erfindungsgemäßen Kerne lassen sich nach dem Guss durch mehrere Hammerschläge ohne Weiteres entfernen. Die so freigelegten Riegel weisen noch Anhaftungen von Sand auf, welche durch ein Ultraschallbad entfernt werden konnten.

Die Vergleichskerne ließen sich nur teilweise mit Hammerschlägen von den Riegeln entfernen. Nach Freilegen der Riegel mit Hilfe eines Dorns wurden die Riegel im Ultraschallbad gereinigt und abschließend untersucht. Hierbei wurden zum einen hartnäckige Anhaftungen von Sand gefunden, welche mit Hilfe des Dorns abgelöst werden konnten. Zum anderen fanden sich Vererzungen, bei denen anhaftender Sand mit großem Kraftaufwand unter Beschädigung der Riegeloberfläche nur teilweise entfernt werden konnte.

Im Vergleich ließ sich das erfindungsgemäße Formstoffgemisch deutlich einfacher und schneller nach dem Guss entfernen. Mit Kernen aus dem erfindungsgemäßen Formstoff wurden Gussteile mit leicht zu entfernenden, geringfügigen Sandanhaftungen erhalten. Vererzungen, wie sie bei den Vergleichsgussteilen auftraten, wurden nicht gefunden.

### Beispiel 5: Zerfallseigeschaften der Formlinge

Um die Zerfallseigenschaften von Formlingen des erfindungsgemäßen Formstoffgemisches zu überprüfen, wurden zwei Mischungen wie in Beispiel 2 beschrieben angesetzt und zu jeweils 4 Kernen verarbeitet. Die Kerne wurden nach dem Guss auf Ihre Zerfallseigenschaften untersucht. Wie bereits beschrieben wurde eine Graugussschmelze in der Gießpfanne verwendet und die Formlinge mit den gegossenen Riegeln nach 3 Tagen Abkühlzeit geprüft. Die Prüfung der Formlinge erfolgte nach Ausrichten der mit einem Schwingungserzeuger verbundenen Gussteile in einer Überkopfposition. Der Schwingungserzeuger beaufschlagte das Gussteil mit einer 30-Hertz-Schwingung mit einer Impulsspitze von bis zu 1,4 kW Leistung. Dabei wurde die Zeit gemessen, innerhalb derer 90% sowie 99% des Formlings von dem Gussteil abgefallen waren.

Formstoffmischungen und Beurteilung der Zerfallseigenschaften sind in der nachfolgenden Tabelle aufgeführt.

**Tabelle 5**

| Formling mit Gussteil einer Graugusschmelze (93%Fe, 3,3%C, 2%Si, 0,4%Mn, Verunreinigungen jeweils < 0,05%) | Vergleichsformling Formstoffgemisch: 5 kg Kernsand, 120g Binder, 5g Silikonöl | | Erfindungskern Formstoffgemisch: 5 kg Kernsand, 90 g Binder 54 g SiO₂ | |
|---|---|---|---|---|
| | 90% | 99% | 90% | 99% |
| 1. Riegel | 8,2 sek. | 11,3 sek. | 4,2 sek. | 9,2 sek. |
| 2. Riegel | 7,4 sek. | 11,8 sek. | 4,4 sek. | 9,4 sek. |
| 3. Riegel | 7,6 sek. | 11,3 sek. | 4,6 sek. | 9,3 sek. |
| 4. Riegel | 7,7 sek. | 11,4 sek. | 4,4 sek. | 9,5 sek. |
| Durchschnitt | 7,7 sek. | 11,5 sek. | 4,4 sek. | 9,4 sek. |

Nach dem Guss weisen die Formlinge der erfindungsgemäßen Mischung deutlich kürzere Zeiten für die Ablösung des Formlings von dem Gussteil auf. Die Formlinge der erfindungsgemäßen Mischung zeigten dabei ein sich schnell ausbreitendes, kleinzelliges Rissmuster, das kurz darauf zur gleichmäßigen Ablösung des Formlings in kleinteiligen Segmenten führte. Verbliebene Sandanhaftungen auf der Gussteiloberfläche konnten in einem Ultraschallbad oder auch manuell mit einem einfachen Tuch entfernt werden.

Die Vergleichsmischung zeigt in ihrem Zerfallsverhalten deutlich längere Ablösezeiten bei unregelmäßiger Rissbildung im Formling und unregelmäßiger Ablösung in unterschiedlich großen Segmenten. Weiterhin verbleibt nach Ablösung von 99 Gewichts% des Formlings eine mit stark anhaftenden Sandkörnern bedeckte Oberfläche, die sich im Gegensatz zur erfindungsgemäßen Mischung sowohl manuell als auch im Ultraschallbad nur unvollständig vom Sand befreien ließ.

Die Erfinder führen das überlegene Zerfallsverhalten auf die gleichmäßig ausgebildeten, vernetzten Binderbrücken zwischen den Sandpartikeln und dem amorphen SiO₂ zurück. Die Vielzahl an gleichmäßig verteilten Binderbrücken erhöht einerseits die Festigkeit und Elastizität des Formlings, kann aber lokal und auf die einzelne Binderbrücke bezogen bei schlagartigem Impuls mit deutlich weniger Kraft gebrochen werden. Die Vernetzung der Brücken ist demzufolge gleichmäßiger, aber auch deutlich geringer, als dies bei der Vergleichmischung der Fall ist. Durch eine erhöhte Anzahl von Binderbrücken mit verringerter Belastbarkeit der einzelnen, ausgebildeten Brücke wird so eine vorteilhafte Kombination von verbesserter Festigkeit und günstigerem Zerfallsverhalten erklärbar.

Die erfindungsgemäßen Formlinge zeigen bei der Entkernung nach dem Guss ein schnelleres und gleichmäßigeres Zerfallsverhalten.

Mit dem erfindungsgemäßen Formstoffgemisch sind Formlinge herstellbar, die im nachfolgenden Guss eine thermische Belastung gleichmäßiger kompensieren. Die so zugänglichen Gussteile sind durch eine verbesserte Formentreue gekennzeichnet, was durch die gleichmäßige Vernetzung der Formstoffpartikel über die mit dem amorphen, angelösten SiO₂ ausgebildeten Binderbrücken erklärt werden kann.

Das Verdichtungsverhalten der erfindungsgemäß zusammengesetzten FormstoffGemische war besonders günstig. Es wurden hervorragende Fließeigenschaften festgestellt und eine sehr gleichmäßige Packungsdichte erzielt.

Tabelle 3 zeigt eine geringe Schwankung in den Festigkeitswerten, was für die hohe Gleichmäßigkeit der erfindungsgemäß erzeugten Formlinge spricht.

Im Zerfallsverhalten sind erfindungsgemäße Formlinge nach dem Guss durch eine gleichmäßige, verbesserte Rissbildung und deutlich schnellere Entkernungszeiten gekennzeichnet.

Die auf den SiO₂-Partikeln ausgebildete Quellphase in Verbindung mit der dichten und gleichmäßigen Packung ergibt eine hohe Biegefestigkeit der aus den Kernen erzeugten Riegelabschnitte. Die Quellschicht zeigt einen sehr geringen Vernetzungsgrad im Vergleich zu einem über reine Binder-Brücken verfestigten SiO₂-haltigen FormstoffGemisch. Der geringe Vernetzungsgrad führt zu kleinen, örtlich begrenzten HaftungsInseln (Baustein-Blockhaftung), die nach dem Gebrauch der Kerne einen beschleunigten Zerfall (Mikrobrüche) ermöglichen. Das Zerfalls-Verhalten der erfindungsgemäßen Formstoffe bzw. Formlinge war daher als überraschend günstig zu beurteilen. Es konnte auf zusätzliche Hilfsmittel jeglicher Art verzichtet werden.

## Patentansprüche

1. Formstoff oder Formling für Gießereizwecke, bestehend aus 1 - 10% Bindemittel auf Alkalisilikatbasis, einem Zuschlag von 1-10 Gew% amorphem, Kugelförmigem, angelöstem Siliziumdioxid, Rest Quarzsand mit einem Korngrößenbereich von 0,01 - 5 mm, wobei das amorphe Siliziumdioxid in Kugelform vorliegt, wobei der Anteil an Partikeln mit 45 oder mehr Mikrometern Durchmesser maximal 1,5 Gew% beträgt
und auf der Oberfläche des amorphen Siliziumdioxids eine Quellphase ausgebildet ist, die eine Dicke von 0,5 - 1 % bezogen auf den mittleren Korndurchmesser aufweist.

2. Formstoff oder Formling nach Anspruch 1, **dadurch gekennzeichnet, dass** der mittlere Korndurchmesser des amorphen Siliziumdioxids in einem Bereich von 10 bis 45 Mikrometern liegt.

3. Formstoff oder Formling nach einem der vorhergehenden Ansprüche, **dadurch gekennzeichnet, dass** das amorphe Siliziumdioxid einen Reinheitsgrad von mehr als 85% aufweiset.

4. Formstoff oder Formling nach einem der vorhergehenden Ansprüche, **dadurch gekennzeichnet, dass** das alkalisch eingestellte Siliziumdioxid auf der Oberfläche negativ geladene Sauerstoffgruppen aufweist.

5. Formstoff oder Formling nach einem der vorhergehenden Ansprüche, **dadurch gekennzeichnet, dass** zwischen dem alkalisch eingestellten Siliziumdioxid und dem Quarzsand Binderbrücken über zusätzliche Bindungszentren ausgebildet sind.

6. Formstoff oder Formling nach einem der vorhergehenden Ansprüche, **dadurch gekennzeichnet, dass** das Bindemittel einen Gehalt an Eisen, Aluminium und/oder Kadmium von 0,01 - 0,50% aufweist.

7. Verfahren zur Herstellung eines Formstoffs oder Formlings für Giessereizwecke nach einem der vorhergehenden Ansprüche, **dadurch gekennzeichnet, dass** als Zuschlag amorphes, angelöstes, kugelförmiges SiO₂ mit einem Anteil an Partikeln mit einer Korngröße von mehr als 45 Mikrometern von max. 1,5 Gew% in eine Suspension mit einem Feststoffgehalt von 20 bis 70% Siliziumdioxid überführt wird und dabei ein pH-Wert von 9 - 14 eingestellt wird,
dass das amorphe Siliziumdioxid während der alkalischen Behandlung für mindestens 4 Minuten gehalten wird, bis sich eine Quellphase auf der Siliziumdioxidoberfläche gebildet hat,
dass das Siliziumdioxid mit Formsand und Binder homogen vermischt wird, wobei eine Mischung aufweisend 1 - 10 % Bindemittel auf Alkalisilikatbasis, 1-10 Gew% amorphes Siliziumdioxid, Rest Quarzsand, erhalten wird,
dass das Siliziumdioxid mit dem Formsand und dem Bindemittel unter Druck in einen Formkasten eingeschossen
und zu einem fertigen Kern getrocknet wird.

8. Verfahren nach dem vorhergehenden Anspruch, **dadurch gekennzeichnet, dass** die Oberfläche des amorphen Siliziumdioxids angelöst wird, wobei der mittlere Korndurchmesser des Siliziumdioxids um 2% aufgeweitet und eine Quellphase ausgebildet wird, die entsprechend eine Dicke von 0,5 - 1 % bezogen auf den mittleren Korndurchmesser aufweist.

9. Verfahren nach einem der vorhergehenden Ansprüche, **dadurch gekennzeichnet, dass** die Behandlung für die Ausbildung der Quellphase, beginnend bei einem angesetzten pH-Wert zwischen 9 und 14 nach maximal 10 Minuten beendet wird.

10. Verfahren nach einem der vorhergehenden Ansprüche, **dadurch gekennzeichnet, dass** der angesetzte pH-Wert zwischen 9 und 14 mit einer maximalen Änderung von 0,1 pH pro Minute abgesenkt wird.

## Claims

1. A moulding material or moulding part for foundry purposes, consisting of 1 - 10 % of binding agent based on alkali silicate, an aggregate containing 1 - 10 percent by weight of amorphous spherical silicon dioxide, remainder quartz sand with a grain size range of 0.01 to 5 mm, wherein
the amorphous silicon dioxide is present in a spherical shape, the percentage of particles with a diameter of 45 or more µm amounting to a maximum of 1.5 percent by weight, and wherein
on the surface of the amorphous silicon dioxide, there is formed a swelling phase comprising a thickness of 0.5 to 1 % with reference to the mean grain diameter.

2. A moulding material or moulding part according to claim 1,
**characterised in**
**that** the mean grain diameter of the amorphous silicon dioxide ranges between 10 and 45 µm.

3. A moulding material or moulding part according to any one of the preceding claims,
**characterised in**
**that** the amorphous silicon dioxide comprises a degree of purity in excess of 85 %.

4. A moulding material or moulding part according to any one of the preceding claims,
**characterised in**
**that**, on its surface, the silicon dioxide set to be alkali comprises negatively charged oxygen groups.

5. A moulding material or moulding part according to any one of the preceding claims,
**characterised in**
**that** between the silicon dioxide set to be alkali and the quartz sand, there are formed binding agent bridges via additional binding centres.

6. A moulding material or moulding part according to any one of the preceding claims,
**characterised in**
**that** the binding agent comprises a content of iron, aluminium and/or cadmium of 0.01 to 0.50 %.

7. A method of producing a moulding material or moulding part for foundry purposes according to any one of the preceding claims,
**characterised in**
**that**, as the aggregate, an amorphous, partially dissolved, spherical SiO₂ with a percentage of particles with a grain size in excess of 45 µm to a maximum of 1.5 percent by weight is transferred into a suspension with a solid matter content of 20 to 70 % silicon dioxide, with a pH-value of 9 - 14 being set,
**that** the amorphous silicon dioxide is held during the alkaline treatment for at least 4 minutes until the swelling phase has formed on the silicon dioxide surface,
**that** the silicon dioxide is homogeneously mixed with moulding sand and binding agent, wherein the mixture comprises 1 to 10 % binding agent based on alkali silicate, 1 to 10 % amorphous silicon dioxide, remainder moulding sand,
**that** the silicon dioxide, together with the moulding sand and the binding agent is shot under pressure into a moulding box and dried to form a finished core.

8. A method according to the preceding claim,
**characterised in**
**that** the surface of the amorphous silicon dioxide is partially dissolved, wherein the mean grain diameter of the silicon dioxide is widened by 2 % and a swelling phase is formed, comprising a thickness of 0,5 to 1 % with reference to the mean grain diameter.

9. A method according to any one of the preceding claims,
**characterised in**
**that** the treatment for forming a swelling phase, starting with a set pH-value ranging between 9 and 14, is ended after a maximum of 10 minutes.

10. A method according to any one of the preceding claims,
**characterised in**
**that** the set pH-value ranging between 9 and 14 percent is lowered with a maximum modification of 0.1 pH per minute.

## Revendications

1. Matériau de moulage ou produit de moulage pour utilisation en fonderie constitué de 1 - 10 % à base de liants sur la base de silicate alcalisé, une addition de 1- 10 % de poids amorphe, sous forme sphérique, avec solution d'oxyde de silice, substance restante de sable de silice avec une taille du grain entre 0,01 et 5 mm, l'oxyde de silice étant amorphe disponible sous forme sphérique, une part de particules avec un diamètre maximale de 45 ou plus micromètres ayant un poids maximal de 1,5 % et en étant formée sur la surface de l'oxyde de silice amorphe une phase de source qui présente une épaisseur entre 0,5 e 1 % par rapport au diamètre moyen de la taille du grain.

2. Matériau de moulage ou produit de moulage selon revendication 1, **caractérisé en ce que** la taille moyenne du grain de l'oxyde de silice amorphe se trouve entre 10 et 15 micromètres.

3. Matériau de moulage ou produit de moulage selon une des revendications précédentes, **caractérisé en ce que** l'oxyde de silice amorphe a un niveau de pureté supérieur à 85 %.

4. Matériau de moulage ou produit de moulage selon une des revendications précédentes, **caractérisé en ce que** sur la surface de l'oxyde de silice alcaline se trouvent des groupes d'oxygène avec charge négative.

5. Matériau de moulage ou produit de moulage selon une des revendications précédentes, **caractérisé en ce qu'**entre l'oxyde de silice alcaline et le sable de silice se sont développés des ponts de liaison sur des centres additionnels de liaison.

6. Matériau de moulage ou produit de moulage selon une des revendications précédentes, **caractérisé en ce que** le liant a un contenu de fer, d'aluminium ou de cadmium entre 0,01 et 0,50 %.

7. Procédure pour la production d'un matériau de moulage ou d'un produit de moulage pour utilisation en fonderie selon une des revendications précédentes, **caractérisée en ce que** comme substance additionnelle on utilise SiO₂ amorphe, en solution et sous forme sphérique, avec une partie de particules ayant une taille du grain supérieure à 45 micromètres avec un poids maximal de 1,5 % transférée dans une suspension avec un contenu de matière solide entre 20 et 70 % d'oxyde de silice en intégrant une valeur de pH entre 9 et 14,
**caractérisée en** autre **en ce que** l'oxyde de silice amorphe est à l'arrêt pendant le traitement alcalin pour un minimum de 4 minutes, jusqu'à la formation de la base de source sur la surface en oxyde de silice, **caractérisée en ce que** l'oxyde de silice est mélangé de manière homogène avec du sable de moulage et du liant en obtenant un mélange contenant entre 1 et 10 % de liant a base d'alcali -silicate, ayant un poids entre 1 et 10 % de silice amorphe avec une partie restante en sable de silice,
**caractérisée en** autre **en ce que** l'oxyde de silice est inclus dans un châssis de moulage sous pression avec le sable de moulage et le liant
en étant séché pour obtenir une graine finie.

8. Procédure selon la revendication précéde, **caractérisée en ce que** la surface de l'oxyde de silice amorphe est soumise à une dissolution superficielle, en élargissant le diamètre moyen du grain de l'oxyde de silice de 2 % et en formant une phase de source ayant une épaisseur entre 0,5 et 1 % par rapport au diamètre moyen du grain.

9. Procédure selon une des revendications précédentes, **caractérisée en ce que** le traitement pour la formation d'une phase de source, en commençant avec une valeur pH entre 9 et 14 est terminée après une durée maximale de 10 minutes.

10. Procédure selon une des revendications précédentes, **caractérisée en ce que** la valeur pH établie entre 9 et 14 est diminuée avec une modification maximale de 0,1 pH par minute.
